## Europäisches Patentamt

## European Patent Office

## Office européen des brevets

(19)

(11) Veröffentlichungsnummer: **0 123 858**
**B1**

(12) # EUROPÄISCHE PATENTSCHRIFT

(45) Veröffentlichungstag der Patentschrift:
**08.10.86**

(51) Int. Cl.⁴: **G 01 N 30/30**

(21) Anmeldenummer: **84102957.2**

(22) Anmeldetag: **17.03.84**

(54) **Elektrische Heizung für einen sich drehenden Probengefässbehälter in einem Probengeber für Gaschromatographen.**

(30) Priorität: **29.04.83 DE 3315651**

(43) Veröffentlichungstag der Anmeldung:
**07.11.84 Patentblatt 84/45**

(45) Bekanntmachung des Hinweises auf die Patenterteilung:
**08.10.86 Patentblatt 86/41**

(84) Benannte Vertragsstaaten:
**DE GB IT**

(56) Entgegenhaltungen:
**CH - A - 468 639**
**DE - A - 2 244 260**
**DE - A - 2 818 251**
**DE - B - 1 297 904**
**US - A - 3 498 107**

(73) Patentinhaber: **Bodenseewerk Perkin-Elmer & Co. GmbH, Alte Nussdorfer Strasse 15 Postfach 1120, D-7770 Überlingen/Bodensee (DE)**

(72) Erfinder: **Chlosta, Wolfgang, Jodokstrasse 16, D-7770 Überlingen (DE)**
Erfinder: **Riegger, Wolfgang, Obere Kapelläcker 12, D-7777 Salem (DE)**

(74) Vertreter: **Weisse, Jürgen, Dipl.-Phys. et al, Patentanwälte Dipl.-Phys. Jürgen Weisse Dipl.-Chem. Dr. Rudolf Wolgast Bökenbusch 41 Postfach 11 03 86, D-5620 Velbert 11 Langenberg (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft eine elektrische Heizung für einen sich drehenden Probengefässbehälter in einem Probengeber für Gaschromatographen, bei dem als Probengefässbehälter ein mit Thermostatisierungsmitteln versehener Metallblock zur Aufnahme einer Mehrzahl von Probengefässen vorgesehen und wahlweise jedes der Probengefässe an eine Probengabestation bewegbar ist.

Eine derartige Heizung ist aus der DE-A-2 818 251 bekannt.

Bei dem Probengeber handelt es sich vorzugsweise um einen, bei dem eine zwecks Entnahme von Proben aus mit selbstdichtenden Membranen abgeschlossenen Probengefässen als Stechkanüle ausgebildete kapillare Verbindungsleitung mit dem Eingang der Trennsäule verbunden ist. In einer zum Eingang der Trennsäule geführten Trägergasleitung ist ein Ventil angeordnet, das zwecks Probenaufgabe absperrbar ist. Zur Aufnahme einer Mehrzahl von Probengefässen sind ein auf einer Achse sitzender Tisch und Thermostatisierungsmittel vorgesehen, wobei durch den Tisch und die Thermostatisierungsmittel wahlweise jedes der Probengefässe unter die feststehende Stechkanüle bewegbar ist und der Tisch und die Thermostatisierungsmittel zusammen in Richtung auf die Stechkanüle nach oben axialbeweglich sind, um das Probengefäss auf die Stechkanüle aufzuschieben, so dass die Kanüle durch die Membran hindurchsticht.

Ein solcher Probengeber ist aus der DE-B-1 297 904 bekannt. Bei derartigen Probengebern wird dem Gaschromatographen Dampf aus dem Dampfraum oberhalb einer in einem Probengefäss mittels einer selbstdichtenden Membran eingeschlossenen Probe zugeführt. In dem durch die Membran abgeschlossenen Probengefäss stellt sich ein Gleichgewichtszustand ein, so dass im Dampfraum oberhalb der Probe die verschiedenen Probenkomponenten mit Partialdrücken enthalten sind, die sich aus der Zusammensetzung der Probe ergeben. Eine Probenkomponente, die in der Probe in hoher Konzentration enthalten ist, hat im Gleichgewichtszustand einen hohen Partialdruck im Dampfraum. Um eindeutige Verhältnisse zu erhalten, muss die Probe dabei auf einer wohldefinierten, relativ hohen Temperatur gehalten werden.

Bei dem durch die DE-B-1 297 904 bekannten Probengeber für Gaschromatographen enthält ein die Probengeber aufnehmender Drehtisch ein thermostatisiertes Flüssigkeitsbad. In dieses Flüssigkeitsbad müssen die Probengefässe von oben eingesetzt werden. Es tritt eine Verdunstung der Flüssigkeit des Flüssigkeitsbades ein. Daher liegt der gegenüber dem Flüssigkeitsbad drehbare Drehtisch auf einer am Rand des Flüssigkeitsbades vorgesehenen Dichtleiste auf. Weiterhin sind das Flüssigkeitsbad und der die Probengefässe aufnehmende Rand des Drehtisches mit einer Abdeckung versehen, die an den Rand des Flüssigkeitsbades angeschraubt ist. Die Abdeckung ist mit bogenförmigen Öffnungen versehen, durch welche hindurch die Probengefässe in den Drehtisch einsetzbar sind. Diese Öffnungen sind wieder durch abnehmbare Deckel verschliessbar. Diese Anordnung ist in Aufbau und Handhabung kompliziert.

Durch die DE-A-2 244 260 ist eine Vorrichtung zum Aufbereiten einer Reihe von Probenansätzen physiologischer Flüssigkeiten mit einer Transportscheibe bekannt, bei welcher die für die Erhöhung der Temperatur bestimmten Einrichtungen im Bereich der Transportscheibe vorgesehen sind. Dabei sind Probengefässe in einer Halterinne geführt, die sich längs des Umfangs der Transportscheibe erstreckt. Eine Heizflüssigkeit aus einem Behälter wird mittels einer Pumpe über eine Heizeinrichtung in die Halterinne geleitet und fliesst aus dieser über einen Überlauf in den Behälter zurück. Die Probengefässe werden so von der Heizflüssigkeit umspült. In der Halterinne sind Temperaturfühler angeordnet, durch welche die Heizeinrichtung gesteuert ist.

Es handelt sich dort um einen Probengeber für Gaschromatographen mit einem gegen eine Stechkanüle abhebbaren Drehtisch. Als Thermostatisierungsmittel ist auch dort ein Flüssigkeitsbad vorgesehen, wobei lediglich dieses Flüssigkeitsbad im Umlauf beheizt und geregelt wird. Diese Umlaufheizung ist aufwendig. Es würde Schwierigkeiten bereiten, einen solchen Umlauf über einen drehbaren und axial anhebbaren Drehtisch zu leiten, wie er bei einem Probengeber der eingangs erwähnten Art erforderlich ist.

Bei Verwendung eines Flüssigkeitsbades ist der Temperaturebereich durch die Siedetemperatur der Flüssigkeit begrenzt.

In der bereits eingangs genannten DE-A-2 818 251 ist als Thermostatisierungsmittel für die Probengefässe ein elektrisch beheizter Metallblock vorgesehen, der um eine nicht drehbare Achse drehbar gelagert ist und mit der Achse als Mitte einen Kranz von axialen Durchgangsbohrungen aufweist. Eine Grundplatte ist verdrehfest mit der Achse verbunden und schliesst die axialen Durchgangsbohrungen nach unten. Es ist ein verschliessbarer Durchbruch zum Einschieben eines Probengefässes in die jeweils mit dem Durchbruch fluchtende axiale Durchgangsbohrung in der Grundplatte vorgesehen, so dass durch Drehen des beheizten Metallblocks die Probengefässe in diesen eingeschoben werden können. Die Achse mit der Grundplatte und dem Metallblock ist in axialer Richtung verschiebbar, so dass dieser in Richtung auf die Stechkanüle axialbeweglich ist.

Die Thermostatisierungsmittel in Form einer elektrischen Heizung bestehen aus einer, mit dem Metallblock fest verbundenen, elektrischen Heizwicklung und sind damit drehbar angeordnet. Die Heizleistung in Form von elektrischer Energie muss somit durch Schleifer auf die Heizwicklung übertragen werden, was vom Wirkungsgrad her ungünstig und von der Konstruktion her aufwendig ist.

Der Erfindung liegt die Aufgabe zugrunde, die elektrische Beheizung eines Probengebers der eingangs definierten Art durch eine Heizwicklung hinsichtlich der Stromzuführung zu vereinfachen.

Erfindungsgemäss wird diese Aufgabe dadurch gelöst, dass als elektrische Heizung eine Heizmanschette (14) verdrehfest mit einem feststehenden, den Metallblock (12) umgebenden Gehäuse (20) ververbunden ist, den verdrehbaren Metallblock (12) eng umschliesst, ihn berührt und beheizt.

Die Erfindung ist nachstehend an einem Ausführungsbeispiel unter Bezugsnahme auf die zugehörigen Zeichnungen näher erläutert:

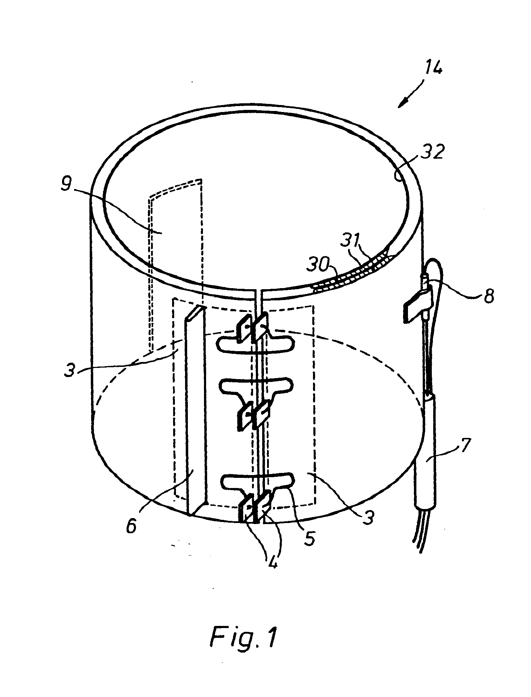

Fig. 1 zeigt die Heizmanschette in einer perspektivischen Darstellung.

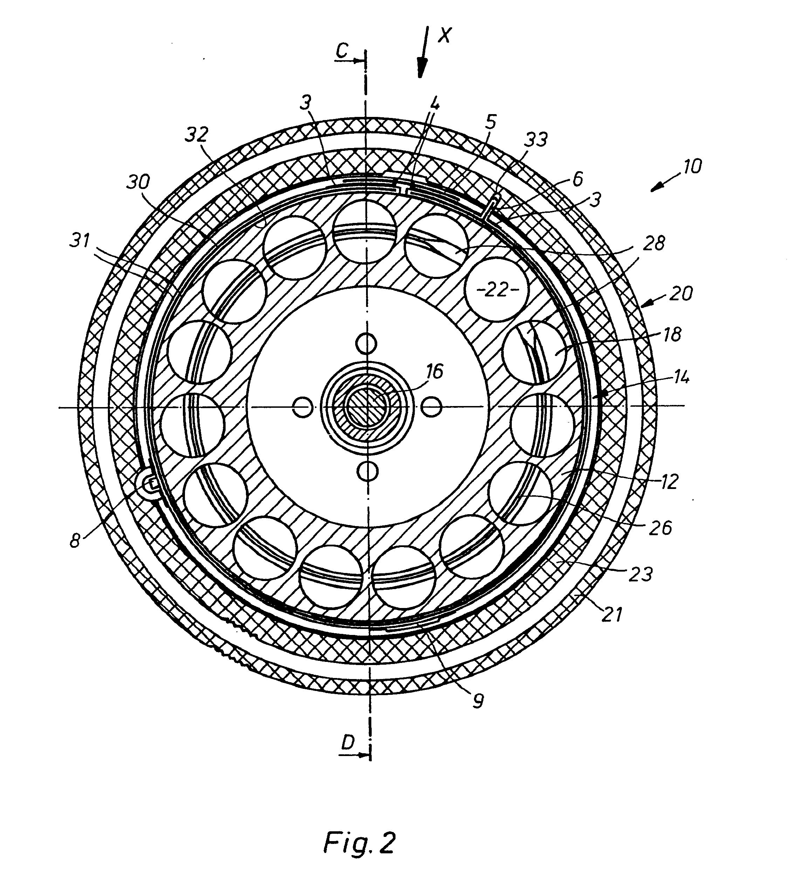

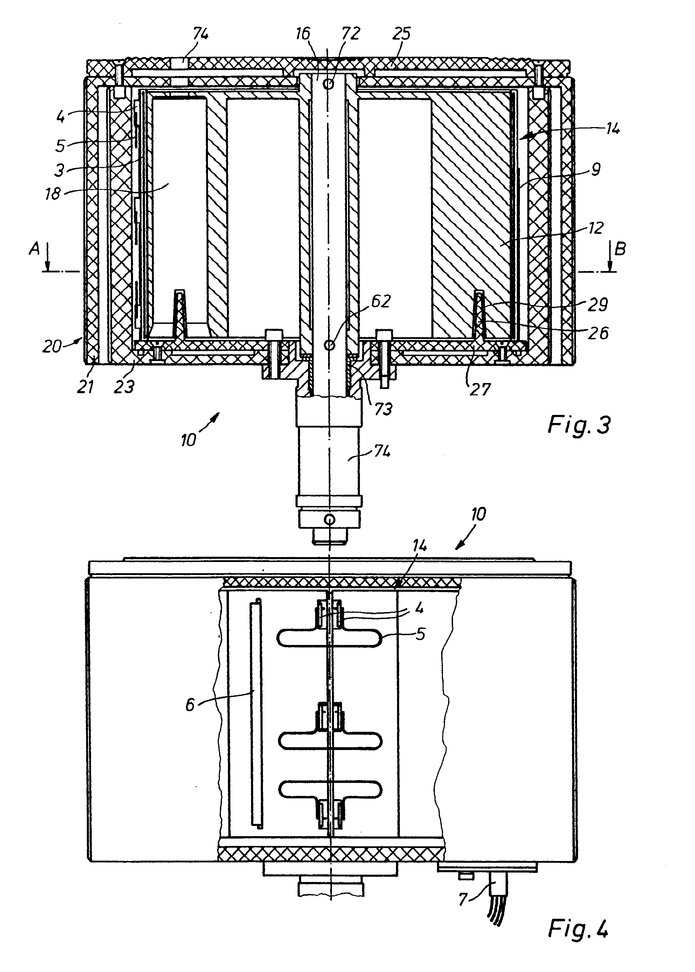

Fig. 2 zeigt eine Schnittdarstellung des Probengebers längs der Linie A-B von Fig. 3.

Fig. 3 zeigt einen Schnitt längs der Linie C-D von Fig. 2.

Fig. 4 zeigt eine, teilweise geschnittene, Ansicht des Probengebers aus der Richtung X von Fig. 2.

Ein Probengeber 10 weist als Thermostatisierungsmittel einen Metallblock 12 auf, der durch eine elektrische Heizung 14 beheizbar ist. Der Metallblock 12 ist durch zwei Querstifte 62, 72 verdrehfest mit einer Welle 16 verbunden. Der Metallblock 12 weist mit der Welle 16 als Mitte einen Kranz von axialen Durchgangsbohrungen 18 auf. Die Welle 16 ist verdrehbar in einer Hülse 74 gelagert. An einem Flansch 75 der Hülse 74 ist ein Gehäuse 20 durch Schrauben befestigt. Das Gehäuse 20 setzt sich aus zwei topfförmigen, übereinander gestülpt miteinander verbundenen Gehäuseteilen 21, 23 zusammen, sowie aus einer Abdeckung 25 und einer mit einem Ringsteg 26 versehenen Scheibe 27. Der Ringsteg 26 greift in einen radial ringförmigen Schlitz 29 des Metallblocks 12 ein und hält die in die axialen Durchgangsbohrungen 18 eingeschobenen Probengefässe in Position. Beschickt werden die Durchgangsbohrungen 18 mit den Probengefässen durch einen Durchbruch 22 in dem topfförmigen Gehäuseteil 23 und der Scheibe 27, durch welchen sich jeweils ein Probengefäss in eine, mit dem Durchbruch 22 fluchtende, axiale Durchgangsbohrung 18 einschieben lässt. Durch Drehung der Welle 16 wird der Metallblock 12 gegenüber dem Gehäuse 20 verdreht, so dass über abgeschrägte Flächen 28 des Ringsteges 26 die Probengefässe angehoben und in Position gebracht werden. Die obere Abdeckung 25 und das topfförmige Gehäuseteil 21 weisen einen Durchbruch 74 für den Durchtritt einer Stechkanüle auf.

Die Heizung 14 wird von einer elektrischen Heizwicklung 30 gebildet, die eingebettet in zwei Siliconmatten 31 den Metallblock 12 zylinderförmig umgibt. Die dem Metallblock 12 zugewandte, innere Seite der zylinderförmigen Heizwicklung ist mit einer PTFE-Schicht 32 versehen und liegt eng und stoffschlüssig am Metallblock 12 an. Da der Metallblock 12 bei Verdrehung um die Welle 16 eine Relativbewegung gegenüber der Heizung 14 ausführt, verbessert die PTFE-Schicht 32 die Gleiteigenschaften. Die zylinderförmig um den Metallblock 12 herumgelegten Siliconmatten 31 mit der Heizwicklung 30 sind an ihren einen Längsschlitz bildenden Enden mit einvulkanisierten Metallaschen 3 versehen, die je drei, rechtwinklig nach aussen abgebogene Bügel 4 aufweisen. In Vertiefungen dieser Bügel 4 rasten bei jeweils zwei sich gegenüber stehenden Bügeln Bügelfedern 5 ein und spannen die Heizmanschette 14 um den Metallblock 12. An einer der Laschen 3 ist zusätzlich eine längliche, rechtwinklig nach aussen weisende Verdrehsicherung 6 angebracht, die die Heizmanschette gegen Verdrehung gegenüber dem Gehäuse 20 sichert, indem die Verdrehsicherung 6 in eine Längsnut 33 des topfförmigen Teils 23 des Gehäuses 20 eingreift. Über die Stromzuführung 7 wird über eine Brandsicherung 8 die Heizwicklung 30 mit Strom versorgt. Über den Temperaturregler 9 wird die Heizleistung überwacht und nachgeregelt.

## Patentansprüche

1. Elektrische Heizung (14, 30) für einen sich drehenden Probengefässbehälter in einem Probengeber (10) für Gaschromatographen, bei dem als Probengefässbehälter ein mit Thermostatisierungsmitteln versehener Metallblock (12) zur Aufnahme einer Mehrzahl von Probengefässen vorgesehen und wahlweise jedes der Probengefässe an eine Probengabestation bewegbar ist, dadurch gekennzeichnet, dass als elektrische Heizung eine Heizmanschette (14) verdrehfest mit einem feststehenden, den Metallblock (12) umgebenden Gehäuse (20) verbunden ist, den verdrehbaren Metallblock (12) eng umschliesst, ihn berührt und beheizt.

2. Heizung nach Anspruch 1, dadurch gekennzeichnet, dass bei der Heizmanschette (14) eine elektrische Heizwicklung (30) zwischen zwei Silikonmatten (31) isoliert eingeschlossen ist.

3. Heizung nach Anspruch 1, dadurch gekennzeichnet, dass die radial innere Fläche (32) der zylinderförmig ausgeführten Heizmanschette (14) mit Polytetrafluorethylen beschichtet ist, um die Verdrehung des Metallblocks (12) gegenüber der Heizmanschette (14) leichtgängig zu gestalten.

4. Heizung nach Anspruch 1, dadurch gekennzeichnet, dass in Silikonmatten (31) zwei Metalllaschen (3) einvulkanisiert sind, an denen rechtwinklig abgebogene vertikal nach aussen stehende und durch Bügelfedern (5) verbindbare Bügel (4) die Heizmanschette (14) um den Metallblock (12) spannen.

5. Heizung nach Anspruch 1, dadurch gekennzeichnet, dass ein rechtwinklig an einer der einvulkanisierten Laschen (3) befestigtes, radial nach aussen stehendes Blech (6) als Verdrehsicherung dient.

## Claims

1. Electric heater (14, 30) for a rotating sample vessel container in a sampling device (10) for gas chromatographs, in which a metal block (12) provided with thermostatizing means is provided as sample vessel container for accomodation of a plurality of sample vessels and selectively each of the sample vessels is movable to a sample feeding station, characterized in that a heating jacket (14) as electric heater is connected non-rotatingly to a stationary housing (20) surrounding the metal block (12) and surrounds tightly with contact and heats the rotatable metal block (12).

2. Heater as set forth in claim 1, characterized in that in the heating jacket (14) an electric heating coil (30) is insulatedly enclosed between two silicon mats (31).

3. Heater as set forth in claim 1, characterized in that the radially inner surface (32) of the cylindrically formed heating jacket (14) is coated with poly-tetrafluorethylene in order to facilitate the rotation of the metal block (12) relative to the heating jacket (14).

4. Heater as set forth in claim 1, characterized in that two metal straps (3) are vulcanized into silicon mats (31), at which straps brackets (4) bent off at a right angle, extending vertically outwards and connectable by means of bow springs (5) strain the heating jacket (14) about the metal block (12).

5. Heater as set forth in claim 1, characterized in that a sheet metal plate (6) attached at a right angle to one of the vulcanized straps (3) and extending radially outwards serves as an antirotating means.

**Revendications**

1. Chauffage électrique (14, 30) pour un récipient de vases d'échantillon dans un dispositif d'alimentation d'échantillon (10) pour des chromatographes pour phases gazeuse, dans lequel on a prévu comme récipient de vases d'échantillon un bloc métallique (12) pourvu de moyens de thermostatisation et destiné à acceuillir plusieurs vases d'échantillon, et chacun des vases d'échantillon est facultativement déplaçable à une station d'échantillon, caractérisé par le fait qu'une manchette chauffant (14) est reliée comme chauffage électrique de manière non-rotative à un boîtier (20) fixe entourant le bloc métallique (12), qu'elle entoure le bloc métallique (12) étroitement, qu'elle le touche et l'échauffe.

2. Chauffage selon la revendication 1, caractérisé par le fait que dans la manchette chauffant, un enroulement chauffant électrique (30) est enfermé de manière isolée entre deux nattes silicones (31).

3. Chauffage selon la revendication 1, catacrérisé par le fait que la surface radiale intérieure (32) de la manchette chauffant (14) formée cylindriquement est couverte de polytetrafluoréthylène afin de faciliter la rotation du bloc métallique (12) par rapport à la manchette chauffant (14).

4. Chauffage selon la revendication 1, caractérisé par le fait que dans des nattes silicones (31) sont vulcanisées deux éclisses métalliques (3) sur lesquelles des étriés (4) recourbés rectangulairement qui sail-lent verticalement vers l'extérieur et qui sont re-liables par des ressorts d'étrier (5), tendent la manchette chauffant (14) autour du bloc métallique (12).

5. Chauffage selon la revendication 1, caractérisé par le fait qu'une tôle (6) saillant radialement vers l'extérieur et fixée rectangulairement à l'une des éclisses vulcanisées (3) sert d'arrêt de rotation.

Fig. 1

**Fig. 2**

Fig. 3

Fig. 4